# EUROPEAN PATENT SPECIFICATION

(11) **EP 2 231 534 B1**
(45) Date of publication and mention of the grant of the patent: **17.10.2012**
(21) Application number: 09704161.0
(22) Date of filing: 23.01.2009
(51) Int. Cl.: C03B 9/447

(54) **BOTTLE TRANSFER ASSEMBLY AND COMPONENTS FOR USE THEREIN**
FLASCHENÜBERTRAGUNGSANORDNUNG SOWIE ZUSAMMENSETZUNGEN ZUR VERWENDUNG DARIN
ENSEMBLE DE TRANSFERT DE BOUTEILLES, ET COMPOSANTS À CET EFFET

(30) Priority: 25.01.2008 GB 0801361
(43) Date of publication of application: 29.09.2010
(73) Proprietor: Lattimer Limited, Merseyside (GB)
(72) Inventor: SWALLOW, Graham, Robert, Aughton, West Lancs, L39 5DW (GB); HASLEHURST, Geoffrey, Wigan WN60SW (GB); FITZPATRICK, Ian, Merseyside PR8 4SG (GB)
(74) Representative: White, Martin Paul
(86) International application number: PCT/GB2009/000193
(87) International publication number: WO 2009/093039

(56) References cited:
- GB-A- 2 182 297

## Description

The present invention relates, *inter alia,* to an apparatus for transfer of bottles formed by a bottle forming machine and to components of said apparatus.

Following the manufacture of a recently formed glass bottle, an arm that is known in the art as a "tong arm assembly" is typically used to transfer the bottle to a conveyor, to the arm it its extremity is affixed a tong head with pneumatically operable tongs that are used to grip the bottle. this latter sub-part is known as a tong head assembly. The arm engages a shaft that causes the arm to swing through an angle (typically of about 180°) so that the bottle can be transferred towards an adjacent conveyor. The bottle is then released as the tong disengages from the neck of the bottle.

Typically a belt drive or chain drive is used to drive the shaft. However this can become worn or loose over time, as can other components, such as bearings, within the assembly that is the tong arm assembly.

In practice, slack and/or lost motion can arise, with the result that the movement of the tongs is not properly synchronised with the bottles. As a result of this bottles may impede with one another and/or or may topple over.

A further difficulty inherent in such tong arm assembly lies in the fact that it has been traditional practice for the axle and the spindle each to be located in a housing of the assembly by means of a respective single bush-type bearing. In such a construction, wear necessarily occurs upon the bearings, arising from the lateral loads imposed by the tongs (and the bottles carried thereby) upon the spindle, and imposed on the axle by the overall weight of the assembly.

GB 2182297 seeks to overcome the foregoing problems. It discloses a tong arm assembly for a bottle forming machine, comprising a main axle, a housing journalled on said axle for swinging movement about an axis provided by the axle between a bottle pick up position and a bottle deposit position.

A spindle is journalled in the housing and carries a tong head, from which depend tongs for gripping bottles and, upon swinging movement, for transferring them between a pick up position and a deposit position whilst hanging substantially vertically. A coupling means is provided that couples the axle and the spindle to maintain the depending position of the tongs during swinging movement of the head, said coupling means comprising complementary toothed wheels or pulleys on the axle and on the spindle, a toothed belt extending around the toothed wheels or pulleys.

A belt tensioning means is also provided that is disposed to act on the belt between the two toothed wheels or pulleys so as to maintain the belt under tension, and thereby to eliminate lost motion and/or possible backlash between the toothed wheels or pulleys.

The invention shown in GB 2182297 has been successful commercially. However, even with the improved assembly described therein there is still a risk of occasional damage to machinery and also of a significant loss of operating time.

This can occur if the bottles are not picked up / deposited correctly on a conveyor. There can be numerous reasons for this. One is that the belt may still become worn. Another is that the tension in the belt may not have been set correctly. The current industry standard for setting belt tension is for a manually adjustable pulley to be correctly tensioned at assembly at place of manufacture. Further adjustments can be carried out if deemed necessary by a trained operator on the machine.

However this is a hazardous operation owing to the high temperatures within the bottle forming machine and the close proximity of other moving parts and mechanisms.

Indeed it is fair to say that *in-situ* adjustment of belt tension can present a high risk of injury (bums, entrapment) to the operator performing the operation. It is therefore a job that is sometimes rushed or not performed accurately.

In any event, because the tension is normally set by the feel of an individual, different operators can adjust the belt to different tensions. Thus great variability can arise. This results in a significant risk of incorrect tensioning (i.e. tensioning outside of a manufacturer's recommended range).

Furthermore, temperatures within a bottle forming machine can fluctuate significantly and thermal expansion/contraction of the take-out arm or associated components can arise and can affect belt tension. Distances between pulleys can therefore change. The belt tension can gain deviate significantly from what is recommended by a manufacturer.

Incorrect belt tension is acknowledged as a major cause of belt failure. This can result in significant down time in order for a belt to be repaired. Faulty or damaged components will need to be removed. There are of course also health and safety concerns, given that hot glass bottles are being transferred.

Even if a belt does not fail completely, if it is not properly tensioned then bottles can become misplaced and may then topple and break. They can also become jammed in the machinery. Jamming can damage machine components, which may need replacement.

The tong arm assembly may also not then function properly, because the timing of the action of the tong head can be adversely affected. This can lead to tong arm assembly collisions (where the tong head comes into unplanned contact with another machine part).

A tong arm assembly collision is an unplanned and undesired collision between the tong arm assembly and any other machine part or assembly. Bottle forming machines operate with split second timing between operations controlled by both pneumatic and electronic systems. If any element in the timing mechanism fails or has faults it is possible for operating procedures to overlap in an undesired manner up to a point where components or moving machine parts collide with one another.

The most likely event here is a tong arm assembly colliding into closely associated moving parts such as a neck ring mechanism or blow head mechanism. Either collision is usually a substantial metal-to-metal collision that can cause damage and disrupt production. Breakages can range from a snapped take-out arm belt to damage of the expensive neck ring or blow-head arm mechanisms. Additionally, a stand alone belt failure (which may result from wear as a belt reaches the end of its service life or which may result from an error in tensioning) can also result in a follow-on metal-to-metal collision, since the arm position will then be out of normal control.

Tong arm assembly collisions typically require the bottle transfer operation to be stopped until repairs have been made and debris removed. This is time consuming and expensive. There is therefore a major need to improve reliability and reduce the potential for collision damage.

One approach is to replace drive belts regularly. However, this is itself time consuming and costly. Furthermore, even replaced drive belts can fail and/or the tension may be incorrectly adjusted. This is therefore not an ideal solution. Indeed the problem remains largely unsolved.

A further major problem is that of reducing the extent of damage and amount of operating time lost in the event of an occasional tong arm assembly collision.

The above problems are long-standing problems in the art.

Indeed GB 2182297 was published over two decades ago and in the period of over two decades since this publication, these problems have not been satisfactorily overcome. This is despite very high level of activity in the field of bottle manufacture over this period.

The present invention seeks to address, or at least to alleviate, one or more of the foregoing problems.

According to the present invention there is provided an apparatus for a bottle forming machine; wherein the apparatus comprises
i) a tong arm assembly for gripping a formed bottle and for transferring it from a first location to a second location through a swinging action about a shaft, and
ii) a drive that drives said action when a clutch is engaged;
characterised in that the clutch allows the tong head assembly to be operably engaged with the drive when the assembly is in normal use, but acts as a release mechanism when a collision occurs so that the tong head assembly becomes disengaged from the drive; wherein the clutch comprises one or more members that move out of one or more recesses when said collision occurs so that the tong head assembly can move independently of said drive.

The invention can contribute to increased efficiency and improved safety.

It is important to appreciate here that release systems which operate while a bottle transfer apparatus is in use have not been considered before.

It is true that GB2182297 discusses quick release of the tong head. However this is in the context of repair and maintenance. The "quick release" system described here is actually provided by a set screw that must be manually removed when the assembly is not in use. Indeed the set screw and associated components are designed to ensure that the tong head assembly remains intact when the assembly is in use.

The apparatus may include a tensioning device that automatically adjusts tension in a drive belt or chain so as to maintain tension when the machine is in use. Thus adequate tension can be maintained throughout operation.

To date, such devices are simply not known for belts/chains used to drive tong arms assemblies.

Indeed the main focus has been upon providing improved belts or drives with a reduced tendency to wear.

Whilst means for adjusting tension are known, they are only operated when the machine is not in use.

For example, GB 2182297 discusses a belt tensioning means that acts so as to deflect one of the runs of a belt between two toothed wheels or pulleys. This is illustrated in Figure 3 of GB 2182297. It is explained in connection with this figure that the belt tension is adjusted by means of a nut threaded onto a stem that is connected to a slide. Thus it is necessary to unscrew the nut and adjust its position whilst the machine is switched off and the belt is not moving.

Preferred embodiments of various aspects of the invention will now be described in further detail:

### Release Mechanism

The release mechanism is in the form of a clutch that allows a tong head assembly to be operably engaged with the drive when the assembly is in normal use, but which allows it to disengage from the drive when a tong arm assembly collision occurs, so that the tong head assembly then moves independently of the drive.

The clutch mechanism comprises one or more members that are located in complementary recesses when the clutch is engaged, but which move out of said recesses when disengagement occurs.

A plurality of such members can be provided. (The size and /or number of the members can be varied if desired. Thus, for example, a large number of small members can be equivalent to a small number of large members.) These may be disposed radially or axially as required by the specific design.

Desirably, pressure is applied to keep said members in said recesses when said clutch is engaged. Pressure can be applied by use of a compression or tension pre-loading device. A preferred method is to use an assembly of linear disc springs, although other systems may be used (e.g. sprung wedges or ramp type arrangements).

In a one embodiment of the invention the clutch is a detent clutch and the members are balls or rollers. The balls or rollers fit into corresponding detents when the clutch is engaged, and are held there by spring pressure but are released from said detents when the clutch is disengaged.

The spring loading coupled with the geometry of the detents allows for a regressive action on disengagement such that following initial disengagement movement the force (originating from the collision) required to further disengage becomes progressively less thereby allowing the clutch to rapidly disengage and the tong head assembly to be free of the influence of the drive thus rapidly releasing strain on any mechanism or trappage.

The release mechanism is preferably set to operate when a predetermined load has been exceeded. Desirably it is "factory set" by the manufacturer and is not intended for adjustment in the field. The unit may be provided as a sealed device requiring minimal human intervention/adjustment through the service life. If desired, a tamper-proof or temper-evident closure (e.g. a seal) may be provided

### Signalling mechanism for switching off glass forming machinery when a collision occurs

The apparatus of the present invention can optionally include a signalling mechanism that acts to signal that a collision has occurred.

For example, a rod (or other releasable component) may be provided that is normally in a stowed position, but is actuated once a collision has occurred. The rod (or other component) can be operably linked to a device that receives the signal.

In one embodiment the rod may act directly or indirectly so as to switch off at least part of the machinery. For example glass forming machinery involved with, or adversely affected by a collision, may be switched off. Other machinery may however be allowed to continue operating if desired. Indeed in many cases several bottle forming assemblies will be run simultaneously. Those not affected by the collision can be allowed to continue operating.

In a particularly preferred embodiment for the signalling mechanism, a feeler pin is provided and is arranged to detect operational movement of the clutch of the apparatus of the present invention such that, in the event of a collision occurring, disengagement of the clutch is mechanically indicated (e.g. outside the enclosure of the mechanism containing the clutch) in order that a switch (or some other device) can be activated to bring to rest the relevant associated machinery and drives in a safe manner.

Alternative signalling mechanisms can be provided to those exemplified above.

These are also within the scope of the present invention, provided that they can be used to indicate a collision and allow suitable action to be taken (e.g. by actuating a switch or some other operably linked device).

Thus, for example one or more sensors may be provided to indicate if a collision has occurred, or is likely to have, occurred (e.g. sensors may be used to sense that a tong arm assembly is not moving in a normal manner or is in an unusual position at a given time).

### Tensioning device

Turning now to the optional tensioning device that can be used with an apparatus of the present invention, it is preferred that this allows tension in a belt or chain to be adjusted continuously, without the need for action by a machine operator.

The tensioning device may be located within a closed compartment that is not easily accessible by the operator. Thus accidental operation can be avoided. The compartment may even be sealed and/or may be locked. Thus access may be restricted to certain personnel (e.g. to specialist service engineers).

The tensioning device will normally be biased against the inside of the drive chain or belt. For example it may be spring-biased.

A torsion spring is preferably used to facilitate eccentric biasing nature of the tensioner. This can be very compact and contained inside the tensioner unit. The spring can be contained in a manner so that if it becomes broken, it will not normally become entangled with the belt or cause any direct damage to other components of the take-out arm assembly.

In a particularly preferred embodiment, the tensioning device comprises an eccentric roller. This can be rotatably mounted upon a shaft.

Desirably a spring (most desirably a torsion spring as aforesaid) engages the eccentric roller. For example it may fit into the slot or other recess formed in the base of the roller.

A tensioner pulley may be mounted on the eccentric roller for biasing against the drive belt or drive chain.

A "pulley" is a member that engages a chain or belt drive and can be used to keep it under tension. It may, for example, be in the form of a toothed cog that is biased against a chain or belt

### Additional aspects of the invention

The invention further includes a method.

In addition to the apparatus of the invention *per se,* the invention includes a method of transferring a bottle from a first location to a second location comprising using the tong arm assembly of an apparatus of the present invention to transfer said bottle.

This method can provide increased safety and efficiency, relative to the prior art methods discussed earlier.

A still further aspect of the invention is a bottle making machine or factory comprising an apparatus of the present invention.

The present invention will now be described by way of example only, without limitation thereof and with reference to the accompanying drawings.
Figure 1 shows an optional automatic belt tensioner in position within a housing. For ease of reference the housing is shown open, with a lower casing removed (although it would be closed when in use) and with the main pulleys and pulley belt omitted for ease of clarity
Figure 2 shows a safety clutch mechanism for use with a tong arm assembly.
Figure 3 illustrates the movement of a tong arm assembly through a typical angle of about 180 degrees from point A to point B and then back to point A.
Figures 4 and 5 illustrate an optional torque limiting device that can be used to generate a signal when a collision has occurred.

### Examples

### Example 1

### Release Mechanism

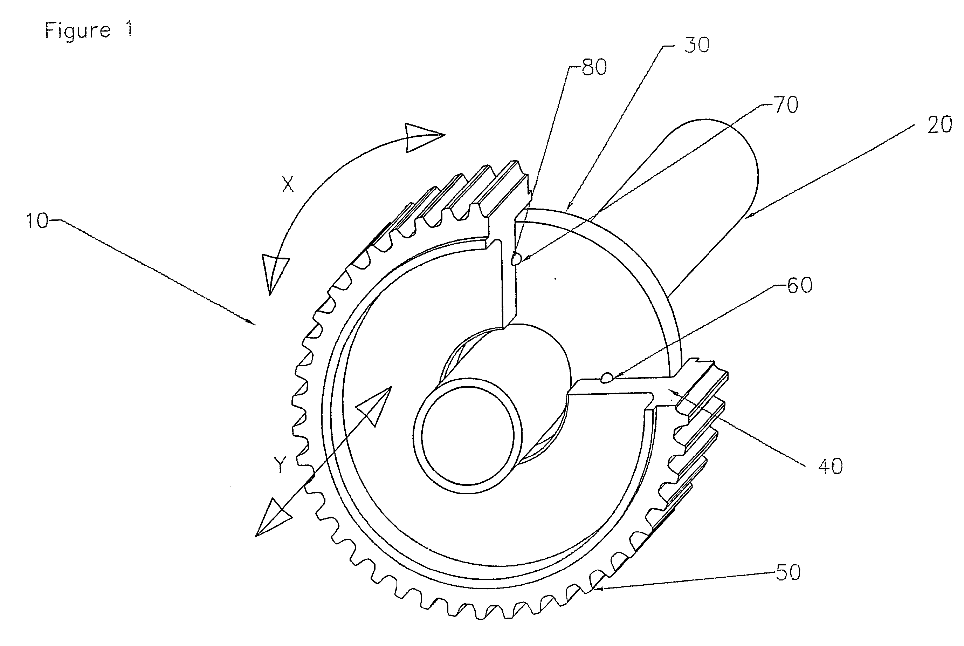

Referring now to Figure 1 in further detail, a release mechanism 10 for a tong arm assembly (not shown) is illustrated.

The tong arm assembly is driven by a main drive shaft 20. The main drive shaft 20 comprises a flange 30, which operably engages a drive belt pulley 40 during normal use. A drive belt (not shown) is mounted onto the drive belt pulley 40 and is engaged by teeth 50 of the pulley 40.

A detent clutch mechanism is provided. This allows the drive shaft flange 30 and drive belt pulley 40 to be operably connected during normal use. The clutch mechanism comprises a plurality of resilient detent balls 60. These are housed in pockets 70 and 80, which are located at opposing inner surfaces of the drive shaft flange 30 and the drive belt pulley 40 respectively.

Arrow X indicates the direction of 'slip' of the clutch mechanism when a collision occurs. This disengages the tong head from further operation, thereby reducing the risk of damage. It also limits the maximum tension applied to the belt and can thereby prevent/reduce breakage.

Arrow Y indicates the direction of force applied in order to hold the detent mechanism in position during normal operation.

The force applied is insufficient to keep the clutch mechanism engaged under excessive torque, as will occur under a crash condition. At this point the detent balls 60 are released from the pockets 70 of the main drive shaft flange 30 whilst remaining retained within the pockets 80 of the drive belt pulley 40. The clutch is thereby disengaged.

Once the clutch has become disengaged an operator can easily re-set it. (If desired an alarm or other signal may be provided to indicate disengagement). The operator, having stopped the machine, can then physically take hold of the arm and rotate it back to the correct timing position. The detent mechanism will track around the face of the main drive shaft flange 30 until a mechanical 'click' and lock occurs as the detent balls 60 engage corresponding receiving pockets 70 in the main drive shaft flange 30.

This signals to the operator that the correct timing has been restored and that the machine can be operated (once any debris has been cleared and/or any damaged components replaced).

In the embodiment shown there are four detent balls 60 present, with two being visible, but any appropriate number can be used.

Indeed, the break out torque (i.e. the torque at which the tong arm assembly will normally be released from operative engagement with the drive) can be varied by simple trial and error. This can be done for example by varying the number, size and/or position of the detent balls 60.

It will be appreciated by those skilled in the art that once the clutch mechanism is assembled onto the drive shaft 20 and pulley 40, with the detent balls 60 in place, the resultant subassembly can be easily connected to a tong arm assembly using standard techniques.

For example, the precision hardened and ground shaft is offered to the roller bearings within the main housing and pressed fully home. A second (output) pulley and tensioner assembly can then be added and secured with screws together with the drive belt. Finally an outer cover can be pressed home over the outer bearings of both the clutch assembly and the output pulley and secured with machine screws.

### Example 2

### Tensioning Device

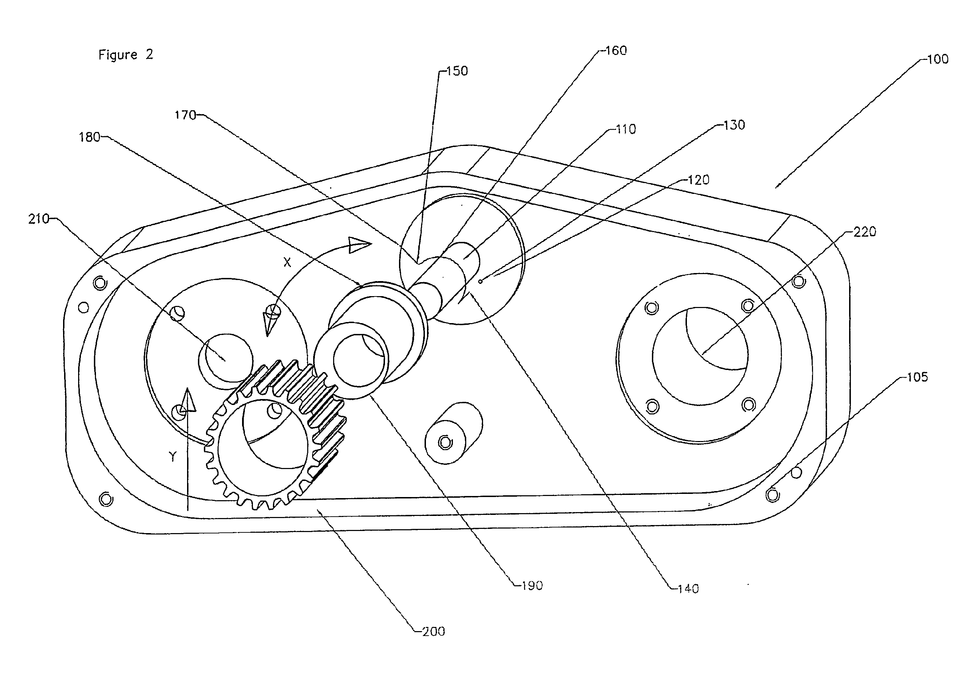

Turning now to Figure 2 in further detail, an optional tensioning device 100 for use with the present invention is shown, which is secured to an aluminium housing 105 by screws (not shown).

The device includes a tensioner pivot shaft 110, which is in the form of a hardened, precision ground steel bar. At the base of the tensioner pivot shaft 110 there is a flange 120, which comprises an aperture 130.

The aperture 130 is positioned for receiving one end 140 of a tempered steel torsion spring 150. The spring 150 has a curved central portion 160, which is shaped to fit around the tensioner pivot shaft 110.

The other end 170 of the torsion spring 150 is elongate and fits into a receiving slot 180 provided in the base of an eccentric shaft 190. The eccentric shaft 190 is hollow and is itself mounted on the tensioner pivot shaft 110.

The eccentric shaft 190 houses bearings (not shown), which permit free, independent rotation of a tensioner pulley 200 and oscillation thereof around the tensioner pivot shaft 110.

The tensioner pulley 200 is formed of a lightweight alloy and has teeth that engage a drive belt (not shown). The drive belt is carried by two belt carrying cogs (also not shown), which are rotatably mounted onto shafts that pass through apertures 210 and 220 in the housing 105. One belt carrying cog is located at each side of the tensioner pivot shaft 110.

Arrow X as shown in Figure 2 indicates in exaggerated form the movement of the tensioner pulley 200. As the pulley 200 rotates it applies a continuous force in the direction of Arrow Y.

As the temperature rises, thermal growth causes the distances between the centres of the belt carrying cogs. Typically this increase will be in excess of 1 mm, assuming a thermal increase of 100°C. (This is the difference between a typical workshop ambient temperature of 20°C and a typical machine ambient temperature of 120°C.)

However, because the tensioner pulley 200 rotates about the tensioner pivot shaft 110 in an eccentric manner (due to the presence of the eccentric shaft 190), it automatically compensates for the additional tension that would otherwise be put upon the belt due to thermal expansion of metal components. Thus a constant tension can be maintained.

In order to assemble the tensioning device 100, the tensioner pivot shaft 110 is firstly screwed to the housing 105. Then the torsion spring 150 is placed into the aperture 130 of the flange of the tensioner pivot shaft 110. The eccentric shaft 190 (together with bearings pressed on using a hydraulic ram-type single acting press machine) is then fitted over the tensioner pivot shaft 110 and the spring 150 is secured in the slot 180.

The tensioner pulley 200 is fitted with roller bearings using an aluminium concentric mandrel and a hand operated fly-press machine and placed over the eccentric shaft 190. The tensioner pulley 200 can then be rotated by hand against the spring 150 and checked for smooth operation. Other sub-assemblies can then be added as is normal for a take-out arm apparatus.

In practice, a unit comprising the tensioning device 100 would normally be sealed (e.g. by screws or bolts) and would not require attention during normal daily operation. Periodic maintenance checks can however be carried out on the tong arm assembly at service intervals, if desired. This allows the components of the tensioning device 100 to be cleaned, degreased, checked for wear and damage, etc.. Parts suspected as faulty can be replaced individually. A service kit can be provided for parts that may become worn/damaged over time.

The tensioning device 100 is not limited to belt driven systems. It works equally well on a tong arm assembly featuring a drive chain instead of a drive belt. Here, owing to the additional rotating mass of a chain, a stiffer spring 150 to that used for the belt driven system (but of a similar general design) and a corresponding idler pulley would normally be used. Thus the tensioning device 100 is equally applicable to chain and belt driven systems.

### Example 3

### Tong arm assembly and associated tong head release / optional signalling mechanism

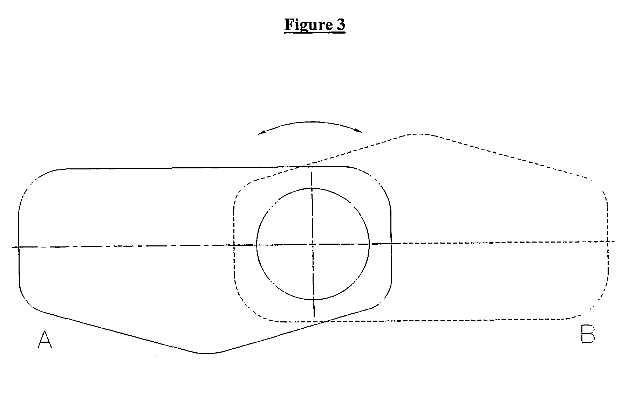

The cycle of a tong arm assembly moves from a horizontal position point A through a typical angle of about 180 degrees to point B and then back to point A. (See Figure 3.) If at any point during this movement there is an unavoidable restriction of the tong head assembly the mechanism is suddenly mechanically stopped or arrested by collision whilst still under the force of the operating mechanism which often results in breakage or damage within the tong arm assembly or other parts of the glass forming mechanism.

Because the cycle is allowed to continue glass is still sent to the sections in the form of gobs but the offending section does not function resulting in substandard glass ware.

To overcome this, an inbuilt release mechanism with automatic machine section stop signalling has been invented.

The invention limits by way of a torque limiting device the reactive force created by the externally influenced mechanical stoppage/collision to a level that prevents internal damage and yields to allow release of any trapping forces so created such that rapid recovery from collision can be effected further by means of a detection device that monitors said torque limiting device generates a signal that can be used to bring to rest the operating mechanism in a timely and safe manner thus eliminating damage of a consequential nature. Its action is described below.

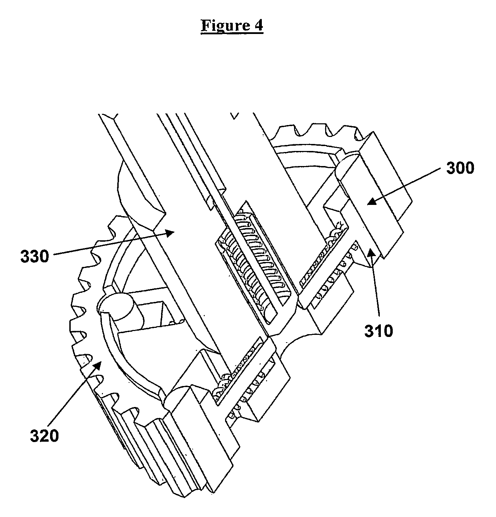

In the sectional view provided by Figure 4 a number of rollers (300) are located in sprung pivoted shoes (310). An identical amount of cut outs within the drive pulley (320) mate up with the sprung rollers located within the pockets in the drive shaft (330).

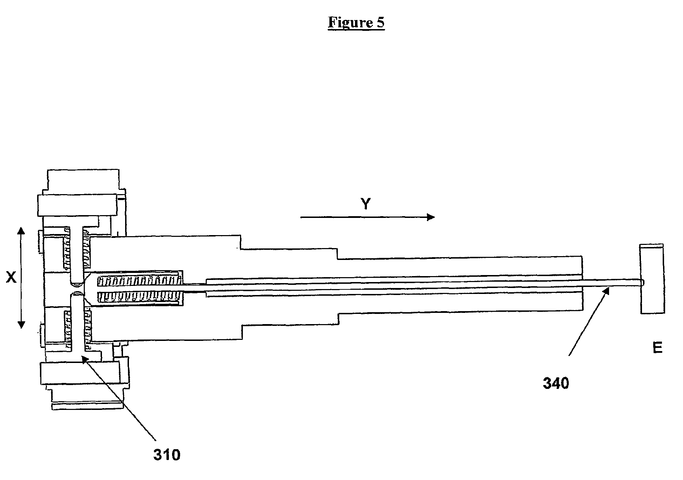

If the tong arm assembly receives a rotational restriction through its cycle movement of 180 degrees the rollers disengage. (See Figure 5.)

By doing so the pivot shoes (310) move in direction of arrow X, producing a movement in direction Y of the sprung cup signalling rod (340). This upward movement is then utilised to contact a switching device mounted at point E which disables the glass machine section. All other sections are left in a running situation continuing production.

## Claims

1. Apparatus for a bottle forming machine; wherein the apparatus comprises
i) a tong arm assembly for gripping a formed bottle and for transferring it from a first location to a second location through a swinging action about a shaft, and
ii) a drive (20) that drives said action when a clutch (10) is engaged;
**characterised in that** the clutch (10) allows the tong head assembly to be operably engaged with the drive (20) when the assembly is in normal use, but acts as a release mechanism when a collision occurs so that the tong head assembly becomes disengaged from the drive (20); wherein the clutch (10) comprises one or more members (60) that move out of one or more recesses (70) when said collision occurs so that the tong head assembly can move independently of said drive (20).

2. Apparatus according to claim 1; wherein at least three of said members (60) are present.

3. Apparatus according to claim 1; wherein at least four of said members (60) are present.

4. Apparatus according to any preceding claim; wherein pressure is applied to keep said members (60) in said recesses (70) when said clutch (10) is engaged

5. Apparatus according to claim 4; wherein said pressure is exerted via one or more springs.

6. Apparatus according to any preceding claim; wherein the clutch (10) is a detent clutch and the members (60) are in the form of balls or rollers that fit into corresponding detents (70) when the clutch (10) is engaged, but are released from said detents (70) when the clutch (10) is disengaged, thereby allowing the clutch (10) to slip and the tong head assembly to move independently of the drive (20).

7. Apparatus according to any preceding claim; wherein the clutch (10) releases the tong head assembly once a predetermined torque has been exceeded.

8. Apparatus according to any preceding claim, further comprising a signalling mechanism that signals when a collision has occurred.

9. Apparatus according to claim 8 that has one or more of the following features:
(i) the signalling mechanism comprises a signalling rod (340) and/or a feeler pin;
(ii) the signalling mechanism causes a valve or switch to be actuated;
(iii) the signalling mechanism includes a feeler pin that is arranged to detect operational movement of the clutch (10) such that in the event of a collision occurring, disengagement of the clutch (10) is mechanically indicated outside the enclosure of the mechanism in order that a switch or some other device can be activated to bring to rest relevant associated machinery.

10. Apparatus according to any preceding claim, further comprising a tensioning device (100) that automatically maintains tension in a drive belt or chain when the assembly is in use.

11. Apparatus according to claim 10, wherein the tensioning device (100) has one or more of the following features:
(i) it allows tension to be adjusted continuously, without the need for action by a machine operator;
(ii) it is located within a closed compartment (105);
(iii) it is biased against the drive chain or belt;
(iv) it comprises an eccentric roller (190) that is mounted upon a pivot (110);
(v) it comprises a tensioner pulley (200) that is mounted on the eccentric roller (190) and engages with a drive belt or a drive chain.

12. A bottle making machine or a bottle making factory, comprising at least one apparatus according to any of claims 1 to 10.

13. A method of transferring a bottle from a first location to a second location comprising using the tong arm assembly of an apparatus as described in any of claims 1 to 10 to transfer said bottle from the first location to the second location.

## Patentansprüche

1. Vorrichtung für eine Flaschenformmaschine, wobei die Vorrichtung Folgendes umfasst:
i) eine Zangenarmanordnung, um eine geformte Flasche zu ergreifen und sie durch einen Schwingvorgang um eine Welle von einem ersten Ort zu einem zweiten Ort zu transferieren, und
ii) einen Antrieb (20), der diesen Vorgang antreibt, wenn eine Kupplung (10) eingerückt ist,
**dadurch gekennzeichnet, dass** die Kupplung (10) gestattet, dass die Zangenkopfanordnung mit dem Antrieb (20) in Wirkeingriff kommt, wenn die Anordnung im normalen Gebrauch ist, jedoch als ein Freigabemechanismus wirkt, wenn eine Kollision auftritt, so dass die Zangenkopfanordnung aus dem Antrieb (20) ausgerückt wird, wobei die Kupplung (10) ein oder mehrere Elemente (60) umfasst, die sich aus einer oder mehreren Aussparungen (70) herausbewegen, wenn die Kollision auftritt, so dass sich die Zangenkopfanordnung unabhängig vom Antrieb (20) bewegen kann.

2. Vorrichtung nach Anspruch 1, wobei mindestens drei der Elemente (60) vorliegen.

3. Vorrichtung nach Anspruch 1, wobei mindestens vier der Elemente (60) vorliegen.

4. Vorrichtung nach einem der vorhergehenden Ansprüche, wobei Druck ausgeübt wird, um die Elemente (60) in den Aussparungen (70) zu halten, wenn die Kupplung (10) eingerückt ist.

5. Vorrichtung nach Anspruch 4, wobei die Ausübung des Drucks über eine oder mehrere Federn erfolgt.

6. Vorrichtung nach einem der vorhergehenden Ansprüche, wobei die Kupplung (10) eine Rastkupplung ist und die Elemente die Form von Kugeln oder Rollen haben, die in entsprechende Rasten (70) passen, wenn die Kupplung (10) eingerückt ist, jedoch aus den Rasten (70) freigegeben sind, wenn die Kupplung (10) ausgerückt ist, wodurch die Kupplung (10) rutschen kann und sich die Zangenkopfanordnung unabhängig vom Antrieb (20) bewegen kann.

7. Vorrichtung nach einem der vorhergehenden Ansprüche, wobei die Kupplung (10) die Zangenkopfanordnung freigibt, sobald ein vorbestimmtes Drehmoment überschritten ist.

8. Vorrichtung nach einem der vorhergehenden Ansprüche, ferner mit einem Signalisierungsmechanismus, der signalisiert, wenn eine Kollision aufgetreten ist.

9. Vorrichtung nach Anspruch 8 mit einem oder mehreren der folgenden Merkmale:
(i) der Signalisierungsmechanismus umfasst einen Signalisierungsstab (340) und/oder einen Taststift,
(ii) der Signalisierungsmechanismus veranlasst die Betätigung eines Ventils oder Schalters,
(iii) der Signalisierungsmechanismus weist einen Taststift auf, der so angeordnet ist, dass er eine Betriebsbewegung der Kupplung (10) erfasst, so dass bei Auftreten einer Kollision das Ausrücken der Kupplung (10) mechanisch außerhalb der Einfassung des Mechanismus angezeigt wird, so dass ein Schalter oder eine andere Einrichtung betätigt werden kann, um relevante zugeordnete Maschinen zum Stillstand zu bringen.

10. Vorrichtung nach einem der vorhergehenden Ansprüche, ferner mit einer Spannvorrichtung (100), die die Spannung in einem Antriebsriemen oder einer Antriebskette automatisch aufrechterhält, wenn die Anordnung im Gebrauch ist.

11. Vorrichtung nach Anspruch 10, wobei die Spannvorrichtung (100) eines oder mehrere der folgenden Merkmale hat:
(i) sie gestattet das kontinuierliche Verstellen der Spannung, ohne dass eine Maschinenbedienperson eingreifen muss,
(ii) sie befindet sich in einem geschlossenen Fach (105),
(iii) sie ist gegen den Antriebsriemen oder die Antriebskette vorgespannt,
(iv) sie umfasst eine exzentrische Rolle (190), die an einem Drehzapfen (110) montiert ist,
(v) sie umfasst eine Spannrolle (200), die an der exzentrischen Rolle (190) montiert ist und mit einem Antriebsriemen oder einer Antriebskette in Eingriff steht.

12. Flaschenherstellungsmaschine oder Flaschenherstellungswerk mit mindestens einer Vorrichtung nach einem der Ansprüche 1 bis 10.

13. Verfahren zum Transferieren einer Flasche von einem ersten Ort zu einem zweiten Ort, wobei die Zangenarmanordnung einer Vorrichtung nach einem der Ansprüche 1 bis 10 verwendet wird, um die Flasche vom ersten Ort zum zweiten Ort zu transferieren.

## Revendications

1. Appareil pour une machine de formage de bouteilles, l'appareil comprenant
i) un ensemble de bras de pince pour saisir une bouteille formée et pour la transférer d'un premier emplacement à un deuxième emplacement par une action de pivotement autour d'un axe, et
ii) un entraînement (20) qui entraîne ladite action lorsqu'un embrayage (10) est embrayé,
**caractérisé en ce que** l'embrayage (10) permet à l'ensemble de tête de pince d'être engagé fonctionnellement avec l'entraînement (20) lors d'une utilisation normale de l'ensemble, mais agit en tant que mécanisme de libération lorsqu'une collision se produit, de telle sorte que l'ensemble de tête de pince soit désaccouplé de l'entraînement (20),
l'embrayage (10) comprenant un ou plusieurs organes (60) qui sortent d'un ou de plusieurs évidements (70) lorsque ladite collision se produit, de telle sorte que l'ensemble de tête de pince puisse se déplacer indépendamment dudit entraînement (20).

2. Appareil selon la revendication 1, dans lequel au moins trois desdits organes (60) sont présents.

3. Appareil selon la revendication 1, dans lequel au moins quatre desdits organes (60) sont présents.

4. Appareil selon l'une quelconque des revendications précédentes, dans lequel une pression est appliquée pour maintenir lesdits organes (60) dans lesdits évidements (70) lorsque ledit embrayage (10) est embrayé.

5. Appareil selon la revendication 4, dans lequel ladite pression est exercée par l'intermédiaire d'un ou de plusieurs ressorts.

6. Appareil selon l'une quelconque des revendications précédentes, dans lequel l'embrayage (10) est un embrayage à crans et les organes (60) sont en forme de billes ou de rouleaux qui s'ajustent dans des crans (70) correspondants lorsque l'embrayage (10) est embrayé, mais sont libérés desdits crans (70) lorsque l'embrayage (10) est débrayé, permettant ainsi à l'embrayage (10) de patiner et à l'ensemble de tête de pince de se déplacer indépendamment de l'entraînement (20).

7. Appareil selon l'une quelconque des revendications précédentes, dans lequel l'embrayage (10) libère l'ensemble de tête de pince une fois qu'un couple prédéterminé a été dépassé.

8. Appareil selon l'une quelconque des revendications précédentes, comprenant en outre un mécanisme de signalisation qui signale quand une collision s'est produite.

9. Appareil selon la revendication 8, qui possède l'une ou plusieurs des caractéristiques suivantes :
(i) le mécanisme de signalisation comprend une tige de signalisation (340) et/ou un doigt de palpeur ;
(ii) le mécanisme de signalisation provoque l'actionnement d'une soupape ou d'un commutateur ;
(iii) le mécanisme de signalisation comporte un doigt de palpeur qui est conçu pour détecter un mouvement fonctionnel de l'embrayage (10), de telle sorte que dans le cas où une collision se produit, le débrayage de l'embrayage (10) est indiqué de manière mécanique à l'extérieur de l'enceinte du mécanisme afin qu'un commutateur ou un autre dispositif puisse être activé pour amener des machines appropriées associées à s'arrêter.

10. Appareil selon l'une quelconque des revendications précédentes, comprenant en outre un dispositif tendeur (100) qui maintient automatiquement une tension dans une courroie ou chaîne d'entraînement lors de l'utilisation de l'ensemble.

11. Appareil selon la revendication 10, dans lequel le dispositif tendeur (100) possède l'une ou plusieurs des caractéristiques suivantes :
(i) il permet à la tension d'être ajustée en continu, sans avoir à recourir à l'action d'un opérateur de machine ;
(ii) il est situé à l'intérieur d'un compartiment fermé (105) ;
(iii) il est sollicité contre la courroie ou chaîne d'entraînement ;
(iv) il comprend un rouleau excentrique (190) qui est monté sur un pivot (110) ;
(v) il comprend une poulie de tendeur (200) qui est montée sur le rouleau excentrique (190) et qui s'engage avec une courroie d'entraînement ou une chaîne d'entraînement.

12. Machine de fabrication de bouteilles ou usine de fabrication de bouteilles, comprenant au moins un appareil selon l'une quelconque des revendications 1 à 10.

13. Procédé de transfert d'une bouteille d'un premier emplacement à un deuxième emplacement, comprenant l'utilisation de l'ensemble de bras de pince d'un appareil tel que décrit dans l'une quelconque des revendications 1 à 10 pour transférer ladite bouteille du premier emplacement au deuxième emplacement.
